# EUROPEAN PATENT APPLICATION

(11) **EP 4 603 277 A1**
(43) Date of publication of application: **20.08.2025**
(21) Application number: 25158139.3
(22) Date of filing: 14.02.2025
(51) Int. Cl.: B32B 21/02, B32B 21/08, B32B 21/10, B32B 27/12, B32B 27/30, B32B 27/32, B32B 27/38

(54) **MULTILAYER PANEL FOR WOODEN CONSTRUCTION**

(30) Priority: 14.02.2024 IT 202400003124
(71) Applicant: Mardello Italia S.r.l.s., 20123 Milano (MI) (IT)
(72) Inventor: Papa, Pasquale Marco, 20123 Milano (IT); Papa, Francesco, 20123 Milano (IT)
(74) Representative: Perani & Partners S.p.A.

(57) **Abstract**

Multilayer laminated panel (10) for wooden constructions, comprising an assembly of layers made of different materials, one over the other and comprising, in succession, a first layer (or outer layer) (12) made of a wood fiber panel, a second layer (14) made of a composite panel with flax fiber, a third layer (16) made of a panel made of PVC (polyvinyl chloride), a fourth layer (18) made of a composite panel with flax fiber, and a fifth layer (20) made of a wood fiber panel, said third layer (16) being a separation between said second layer (14) and fourth layer (18).

## Description

The invention is about a multilayer laminated panel for wooden constructions.

Made of sustainable materials to be preferably used in the construction field with the function of structural reinforcement of wooden construction , creation of cross braces or tie systems, for seismic reinforcement of buildings and similar uses In the field of "eco-sustainable" building constructions (a sector typically known by the term "bio-building"), wood is widely used, combined with other known eco-sustainable materials for the construction of wooden buildings such as houses and similar.

These wooden constructions, in compliance with seismic regulations, must include reinforcement elements to provide structural resistance up to the maximum seismic level, making the wooden construction self-supporting.

Building a wooden building self-supporting also means avoiding the need to create plates and bases that are too impactful on the ground for anchoring the house.

The reinforcement elements, in the terms of seismic issues, are also used in the recovery of constructions and/or parts of buildings made of wood.

So far In regard of seismic reinforcement issues and for the recovery or reconstruction of damaged wooden building parts, steel tie rods or other known materials such as carbon fiber composites, aramid fibers, or glass fiber and similar are used

Steel reinforcements, although structurally functional, have significant drawbacks related to the weight of the metal material as well as the difficulties in calculating the reinforcement dimensions.

Steel reinforcements also have an aesthetic drawback, represented by the difficulty of integrating such reinforcements within the wooden construction or portion of the wooden construction Steel reinforcements may include self-drilling screws and toothed metal plates that can create aesthetic issues.

Reinforcements made of composite materials have significant drawbacks and they have numerous environmental issues related to the production of the matrix and reinforcement (in terms of emissions and similar - 90% of the impacts of a composite material are derived from the production of the matrix and reinforcement).

Composite material reinforcements also have a drawback related to the fact that they are difficult to recycle and separate.

Scope of the present invention is to overcome the above-mentioned drawbacks.

In particular, purpose of the present invention is to provide a multilayer laminated panel for wooden constructions to be used as a seismic reinforcement element, supporting frames of wooden buildings, for horizontal braces of the same structures and similar, for renovation and restoration of wooden parts of both new and old buildings.

A further purpose of the present invention is to provide a multilayer laminated panel with resistance and elasticity in compliance with seismic regulations.

A further scope of the present invention is to provide a multilayer laminar panel that allows a reduction in the thickness and weight of wooden buildings, thus enabling a reduction in the amount of wood with a low environmental impact.

A further scope of the present invention is to provide a multilayer laminar panel that is easy to transport and assemble.

A further scope of the present invention is to provide a multilayer laminar panel that allows for the creation of self-supporting wooden constructions, lighter, more durable, and more easily constructible from a construction point of view, without the use of energy-intensive materials, not compatible with the ecosystem of wooden constructions, without the use of materials derived from fossil energies.

A further scope of the present invention is to provide a multilayer laminar panel that ensures high reliability and durability over time and can be easily and economically manufactured.

These and other purposes are achieved by the invention that presents the characteristics of claim 1

According to the invention a multilayer laminated panel for wooden constructions is provided, comprising an assembly of layers made of different materials, superimposed one over the other and comprising, in succession, a first layer (or outer layer) ( made of a wood fiber panel, a second layer made of a composite panel with flax fiber, a third layer made of a panel made of PVC (polyvinyl chloride), a fourth layer made of a composite panel with flax fiber, and a fifth layer made of a wood fiber panel, said third layer being a separation between said second layer and fourth layer. Advantageous embodiments of the invention appear from the dependent claims.

The constructional and functional characteristics of the multilayer laminated panel for wooden constructions of the present invention can be better understood from the detailed description that follows, referring to the attached drawing tables that illustrate a form of realization given only for exemplary and non-limiting purposes and in which:
figure 1 schematically represents an isometric view of a multilayer laminated panel for wooden constructions of the present invention;
figure 2 schematically illustrates an isometric view of a wooden construction provided with the multilayer laminated panel of the invention;
figure 3 schematically illustrates an enlarged detail of figure;
figure 4 schematically illustrates a further use of the multilayer laminated panel of the invention on wooden constructions.

With reference to the cited figures, the multilayer laminated panel for wooden constructions of the present invention, indicated overall with 10, comprises an assembly of layers made of different materials, superimposed one over the other and, more specifically, comprises (in succession) a first layer (or outer layer) 12 in high-density wood fiber (HDF - High Density Fiberboard), a second layer 14 (or inner layer, below the first layer 12) in flax fiber in bio-based epoxy resin of BID type (bidirectional or balanced) with cross fibers, a third layer 16 made of a panel made of biologically sourced PVC (polyvinyl chloride) based on natural materials, a fourth layer 18 made of a panel in flax fiber and natural-based epoxy resin, and finally a fifth layer 20 made of high-density wood fiber (HDF - as in the case of the first layer).

The first layer (or outer layer) 12, as well as the fifth layer 20, are made of high-density wood fiber and comprise wood fiber and are made by reusing processing scraps or pieces of wood to be recycled that, after being well shredded, are transformed into fibers to be assembled and held together in a mold thanks to the action of specific and known binding products that can be defined, for example, by non-toxic adhesives or natural resins (in this case, an absolutely ecological and recyclable material is obtained, therefore usable in full safety); the compaction of the wood fibers is carried out by exerting very intense pressure to obtain a mass volume of over 800 kg per square meter.

The use of HDF avoids the formation of air gaps inside it with an advantage from an aesthetic as well as functional point of view, also ensuring optimal thermal and acoustic insulation.

First layer 12 and fifth layer 20 have a thickness typically between 0.5 centimeters and 1 centimeter. The second layer 14 and the fourth layer 18, as previously described, are made of a composite in flax fiber impregnated with bio-based epoxy resin, i.e., resin derived from natural and renewable sources such as vegetable oils, lignin, algae, starch, and, in general, biodegradable, recyclable, and low environmental impact resins that, in addition to these eco-sustainability characteristics, ensure good adhesion with flax fibers and good mechanical and thermal resistance. The resin that impregnates the flax fiber has the function of solidifying said second layer 14 and the fourth layer 18 with, respectively, the first layer 12 and the fifth layer 20 to define a rigid and resistant panel.

Alternatively, the composite of said second layer 14 and fourth layer 18 may comprise flax fiber and thermoplastic polymers, i.e., composites obtained by mixing flax fibers with thermoplastic polymers such as polypropylene, polyethylene, polylactide, and similar, which can also be "bio-based" or biodegradable depending on the source and chemical structure; these composites are easily workable with hot or cold molding techniques.

As further alternative, the composite of said second layer 14 and fourth layer 18 may comprise flax fiber and gypsum, i.e., a composite obtained by combining flax fibers with gypsum; the composite thus obtained is fireproof, insulating, and resistant to atmospheric agents, as well as being characterized by low cost and easy availability. The second layer 14 and the fourth layer 18 in flax fiber composite may have a thickness typically between 0.3 centimeters and 1 centimeter.

Flax fiber used as reinforcement in polymer matrix composite materials, such as epoxy resin, has a density of about 1500 kg/m3, a Young's modulus of about 70 GPa, and a tensile strength of about 800 MPa; the thickness of the flax fiber depends on the type of fabric used, which can be continuous or discontinuous filaments, and the method of composite production, and generally, the thickness of the flax fiber varies from a few microns to a few millimeters.

The third layer 16 is intermediate between the assembly defined by the first layer 12 and the second layer 14 and the assembly defined by the fourth layer 18 and the fifth layer 20 and constitutes a separation element between said second layer 14 and fourth layer 18 made of flax fiber in epoxy resin, said third layer has a thickness of about 3 millimeters.

Considering that shear and flexural resistance depends not only on flax fiber but also on the polymer matrix and the ratio between the two, the orientation of the fibers, and the quality of the interface between fiber and matrix, the presence of two layers of flax fiber composite, contained between two layers of HDF wood fiber (first layer 12 and fifth layer 20) and separated by a sheet of natural-based polyester (third layer 16), allows doubling the resistance advantage, as it is known that the orientation of the fibers is crucial for achieving greater resistance capacity.

The multilayer panel thus defined has a thickness depending on the uses to which it is intended.

In case of using the multilayer panel as seismic support, the thickness is typically 4 centimeters. In case of use for cross braces, the thickness of the multilayer panel can be between 1 and 2 centimeters.

In case of using such a multilayer panel as a support for elements such as photovoltaic panels or**,** inside buildings, for reinforcing lateral walls of furniture or partitions or for structural reinforcement of mezzanines and similar, the thickness of the panel can be between 2 and 2.5 centimeters

The second layer 14 and the fourth layer 18 in flax fiber epoxy resin, as well as the third layer 16 in biologically sourced PVC (polyvinyl chloride) based on natural materials, are made by a pultrusion process.

In alternative the second layer 14 and fourth layer 18 and said third layer 16 can be made by molding and compression.

With reference to figures 2, 3, and 4, some exemplary uses of the multilayer panel of the invention are illustrated.

Figure 2 and the enlarged detail of figure 3 illustrate a use of the multilayer panel of the invention for reinforcing wooden buildings; in particular, beams 30 of said multilayer panel 10 are arranged along the entire perimeter of a building 22 and in the upper part of the same in correspondence with the roof, said beams 30 of multilayer panel 10 positioned both on the external walls and on the internal walls of said building to define beams opposed to each other, separated by the walls of the building 22 and solidified together in a known manner.

For each wall of the building and for each surface of the same wall, one or more beams of multilayer panel can be coupled depending on specific needs. With reference to figure 4, a further example of use of the multilayer panel of the invention is illustrated, and more specifically, the structure of a cross brace 26 for a roof of a building made with the multilayer panels of the invention is illustrated.

Uses of the multilayer panel of the invention, not represented in the figures, are possible.

The multilayer panel of the invention can, for example, be used as a support element for photovoltaic panels installed on the roof of a building; in fact, by means of the multilayer panel, the photovoltaic panels can be inserted on the roof to be mounted on a wooden building before the roof itself is mounted, so that, once the roof is mounted, the photovoltaic panel forms part of the surface of the same without the need to use metal joints and screws.

The multilayer panel of the invention can also be used inside a building as a reinforcement element for pre-installed furniture, for internal stairs, to make mezzanine structures more load-bearing inside a wooden building and similar.

As can be seen from the above, the advantages achieved by the multilayer panel of the invention are evident.

The multilayer laminated panel for wooden constructions of the present invention, applied to buildings or constructions made of wood, allows making such buildings or constructions advantageously self-supporting (resistant to variable stresses from micro (related to wood settling) to macro related to the action of strong impacts (such as, for example, those related to seismic stress), with consequent and correlated advantages of greater lightness, durability, construction, and calculation of the structures thus realized; the use of the laminated panel of the invention avoids the need to create plates and bases for anchoring the wooden building that are very impactful on the ground.

Advantage of the multilayer panel of the invention, as a consequence of the above advantage, is that it makes both the design and construction and consolidation phases of wooden structures easier; these advantages are intended in terms of time (design and construction) as well as saving materials and equipment for plinths and plates. Advantage of the multilayer panel of the invention is that, placed at the top of buildings, it allows for structural reinforcement in accordance with seismic regulations as well as renovation and restoration of wooden parts of both new and old buildings.

Advantage of the multilayer panel of the invention is that, by reducing the thickness and weight of buildings or constructions made of wood, it reduces the need for large quantities of wood and, therefore, reduces the amount of wood required for constructions and, consequently, makes transport, assembly, design, calculation, and similar easier Although the invention has been described above with reference to an exemplary and non-limiting form of realization, numerous modifications and variants will be evident to a skilled technician in the field in light of the above description.

The present invention intends to embrace all modifications and variants that fall within the scope of the following claims.

## Claims

1. A multilayer laminated panel (10) for wooden constructions, **characterized by** comprising an assembly of layers made of different materials, superimposed one over the other and comprising, in succession, a first layer (or outer layer) (12) made of a wood fiber panel, a second layer (14) made of a composite panel with flax fiber, a third layer (16) made of a panel made of PVC (polyvinyl chloride), a fourth layer (18) made of a composite panel with flax fiber, and a fifth layer (20) made of a wood fiber panel, said third layer (16) being a separation between said second layer (14) and fourth layer (18).

2. The multilayer laminated panel (10) for wooden constructions according to claim 1, **characterized by** the fact that the first layer (12) and the fifth layer (20) are made of high-density wood fiber (HDF - High Density Fiberboard).

3. The multilayer laminated panel (10) for wooden constructions according to claim 1, **characterized by** the fact that the second layer (14) and the fourth layer (18) are made of a composite in flax fiber and epoxy resin derived from natural and renewable sources or flax fiber and thermoplastic polymers flax fiber and gypsum.

4. The multilayer laminated panel (10) for wooden constructions according to one or more of the preceding claims, **characterized by** the fact that the first layer (12) and the fifth layer (20) have a thickness between 0.5 centimeters and 1 centimeter.

5. The multilayer laminated panel (10) for wooden constructions according to one or more of the preceding claims, **characterized by** the fact that the second layer (14) and the fourth layer (18) each have a thickness between 0.3 centimeters and 1 centimeter.

6. The multilayer laminated panel (10) for wooden constructions according to one or more of the preceding claims, **characterized by** the fact that the third layer (16) has a thickness of about 3 millimeters.

7. The multilayer laminated panel (10) for wooden constructions according to one or more of the preceding claims, **characterized by** comprising an overall thickness not exceeding 4 centimeters.

8. The multilayer laminated panel (10) for wooden constructions according to one or more of the preceding claims, **characterized by** the fact that the second layer (14) and the fourth layer (18) and the third layer (16) are made by a pultrusion process or by molding and compression.

9. Use of the multilayer laminated panel (10) for wooden constructions according to the preceding claims for reinforcing wooden buildings, **characterized by** comprising beams (30) of said multilayer panel (10) arranged along the entire perimeter of a building (22) and in the upper part of the same in correspondence with the roof, said beams (30) positioned both on the external walls and on the internal walls of said building (22) to define beams opposed to each other, separated by the walls of the building and solidified together, with each beam (30) formed by one or more multilayer panels (10) coupled.

10. Use of the multilayer laminated panel (10) for wooden constructions according to the preceding claims for a cross brace (26) for a roof of a building.
